Europäisches Patentamt

(19) European Patent Office

Office européen des brevets

(11) **EP 0 640 561 B1**

(12) **EUROPEAN PATENT SPECIFICATION**

(45) Date of publication and mention
of the grant of the patent:
**11.11.1998 Bulletin 1998/46**

(51) Int. Cl.$^6$: **C01B 3/40**

(21) Application number: **94202387.0**

(22) Date of filing: **22.08.1994**

(54) **Process for the catalytic partial oxidation of hydrocarbons**

Verfahren zur Teiloxidation von Kohlenwasserstoffen

Procédé pour l'oxydation partielle d'hydrocarbures

(84) Designated Contracting States:
**AT BE CH DE DK ES FR GB GR IT LI NL PT SE**

(30) Priority: **24.08.1993 EP 93202478**

(43) Date of publication of application:
**01.03.1995 Bulletin 1995/09**

(73) Proprietor:
**SHELL INTERNATIONALE RESEARCH
MAATSCHAPPIJ B.V.
2596 HR Den Haag (NL)**

(72) Inventors:
• **Lednor, Peter William
  NL-1031 CM Amsterdam (NL)**
• **Vonkeman, Koert Alexander
  NL-1031 CM Amsterdam (NL)**

(56) References cited:
**WO-A-92/11199**          **WO-A-93/01130**
**US-A- 3 953 356**       **US-A- 5 149 464**

Printed by Xerox (UK) Business Services
2.16.6/3.4

## Description

The present invention relates to a process for the catalytic partial oxidation of of hydrocarbons, in particular a process for the preparation of a mixture of carbon monoxide and hydrogen from a methane-containing feed, for example natural gas or associated gas.

The partial oxidation of hydrocarbons, for example methane or natural gas, in the presence of a catalyst is an attractive route for the preparation of mixtures of carbon monoxide and hydrogen, known in the art as synthesis gas. The mixture so-produced may be converted into valuable hydrocarbon products, for example fuels boiling in the middle distillate range and hydrocarbon waxes, by such processes as the Fischer-Tropsch synthesis well known in the art. Alternatively, the mixture may be converted into products such as methanol by synthesis processes equally well known in the art.

The optimum catalytic partial oxidation process for commercial application would give high levels of conversion of the hydrocarbon feedstock with a high level of selectivities to carbon monoxide and hydrogen.

The literature contains a number of documents disclosing details of experiments conducted into the catalytic partial oxidation of hydrocarbons, in particular methane, employing a wide range of catalysts. Typically, these catalysts have comprised an active metal selected from Group VIII of the Periodic Table of the Elements (CAS version as given in the Handbook of Chemistry and Physics, 68th Edition) supported on a refractory oxide carrier, such as alumina or silica.

Thus, European patent application publication No. 0 262 947 (EP-A-0 262 947) discloses a process for the catalytic partial oxidation of methane using a catalyst comprising platinum and chromium oxide supported on a refractory oxide carrier. The catalyst specifically exemplified in EP-A-0 262 947 comprises silica as the carrier material.

A.T. Ashcroft, et al ("Selective oxidation of methane to synthesis gas using transition metal catalysts", Nature, Vol. 344, No. 6264. pp. 319 to 321, March 1990) disclose experiments conducted using lanthanide ruthenium oxides of formula $Ln_2Sn_2O_7$ for the partial oxidation of methane. A range of lanthanides were tested at a temperature of 777°C, a gas hourly space velocity of 40000 $h^{-1}$ and a pressure of 1 atmosphere. It was concluded by the authors that, under the prevailing process conditions, the active catalyst comprised ruthenium metal supported on a metal oxide carrier.

Similarly, R.H. Jones, et al ("Catalytic conversion of methane to synthesis gas over europium iridate, $Eu_2Ir_2O_7$", Catalysis Letters 8 (1991) 169 to 174) describe the selective partial oxidation of methane over the europium iridium pyrochlore, $Eu_2Ir_2O_7$, at a pressure of 1 atmosphere and at a temperature of 873 K (600°C). The active catalyst was shown to comprise particles of iridium metal supported on europium oxide. Similar results are disclosed by P.D.F. Vernon, et al ("Partial oxidation of methane to synthesis gas", Catalysis Letters 6 (1990) 181 to 186, and Catalysis Today, 13 (1992) 417 to 426) for nickel, ruthenium, rhodium, palladium, iridium and platinum, either supported on alumina carriers or present as the metals in oxides derived from mixed oxide precursors.

More generally, United States Patent No. 5,149,464 (US-A-5,149,464) is directed to a method for selectively oxygenating methane to carbon monoxide and hydrogen by bringing the reactant gas mixture at a temperature of about 650°C to 900°C into contact with a solid catalyst which is generally described as being either:

a) a catalyst of the formula $M_xM'_yO_z$, where:

M is at least one element selected from Mg, B, Al, Ln, Ga, Si, Ti, Zr and Hf; Ln is at least one member of lanthanum and the lanthanide series of elements;
M' is a d-block transition metal,
and each of the ratios x/y and y/z and (x+y)/z is independently from 0.1 to 8; or

b) an oxide of a d-block transition metal; or
c) a d-block transition metal on a refractory support; or
d) a catalyst formed by heating a) or b) under the conditions of the reaction or under non-oxidizing conditions.

The d-block transition metals are said in US-A-5,149,464 to be selected from those having atomic number 21 to 29, 40 to 47 and 72 to 79, the metals scandium, titanium, vanadium, chromium, manganese, iron, cobalt, nickel, copper, zirconium, niobium, molybdenum, technetium, ruthenium, rhodium, palladium, silver, hafnium, tantalum, tungsten, rhenium, osmium, iridium, platinum and gold. It is stated in US-A-5,149,464 that the preferred metals are those in Group VIII of the Periodic Table of the Elements, that is iron, osmium, cobalt, rhenium, iridium, palladium platinum, nickel and ruthenium.

The process described in US-A-5,149,464 is operated at a temperature in the range of from 650°C to 900°C, with a range of from 700°C to 800°C being preferred. A range of experiments are described in US-A-5,149,464 in which a variety of catalysts comprising Group VIII metals were tested, including ruthenium oxide, praesidium/ruthenium oxides, pyrochlores, ruthenium on alumina, rhodium on alumina, palladium on alumina, platinum on alumina, nickel/aluminium oxide, perovskites and nickel oxide.

A similar general disclosure of a catalyst for use in the catalytic partial oxidation process is made in International Patent Application publication No. WO 92/11199. WO 92/11199 specifically discloses experiments in which catalysts comprising iridium, palladium, ruthenium, rhodium, nickel and platinum supported on alumina were applied. All the experiments were conducted under mild process conditions, with typical conditions being a pressure of 1 atmosphere, a temperature of 1050 K (777°C) and a gas hourly space velocity of about 20,000 /hr. In the text of WO 92/11199 it is stated that extended life tests of the catalysts were underway, but that most catalysts should be expected to show no deterioration in activity after 80 hours, and possibly much longer.

Japanese patent application publication No. 58-207946 (JP-A-58-207946) discloses a catalyst for the partial oxidation of hydrocarbons, which catalyst comprises either a combination of an alumina-magnesia spinel, cobalt aluminate, barium carbonate and barium aluminate, or a combination of an alumina-magnesia spinel, cobalt, cobalt oxide and barium aluminate. It is suggested in JP-A-58-207946 that the catalyst is suitable for the partial oxidation of hydrocarbons such as natural gas, methane, ethane, propane and butane. However, the specification of JP-A-58-207946 is concerned primarily with a process for producing cementation gas containing carbon monoxide and hydrogen, for the surface hardening of steel. In this respect, the examples of JP-A-58-0207946 are limited to the partial oxidation of butane, yielding a mixture of carbon monoxide and hydrogen having a hydrogen/carbon monoxide ratio of about 1.3. The experiments were conducted at a space velocity of 12,000 $hr^{-1}$ using as feed a mixture of air and butane, with the amount of air being 1.025 times the theoretical amount required to oxidise butane to carbon monoxide and hydrogen (that is an oxygen/carbon ratio of 0.51). There is no disclosure in JP-A-58-207946 of suitable operating pressures for the partial oxidation process. It is stated in JP-A-58-207946 that the catalysts allow the partial oxidation process to be operated with a good efficiency at low temperatures, that is below 1000°C. To this end, all the experiments testing the catalysts were conducted at 980°C.

Finally, International patent application publication No. WO 93/01130 discloses a process for the partial oxidation of methane using a catalyst comprising a platinum group metal and/or metal oxide supported on a lanthanide oxide, and/or an oxide of a metal from Group IIIB and/or an oxide of a metal from Group IVB of the Periodic Table and/or alumina. A range of experiments are described in WO 93/01130, in which catalysts consisting of palladium supported on oxides of scandium, yttrium, lanthanum, titanium, zirconium, hafnium, cerium, samarium, aluminium, silicon and mixed oxides of barium/cerium and strontium/cerium. The experiments were conducted at a temperature of 750°C and a gas hourly space velocity of 5000 $hr^{-1}$ using a feed composition of 45% methane : 5% oxygen : 55% argon. No operating pressure is specified in WO 93/01130. The results disclosed in WO 93/01130 show that, under the operating conditions selected, catalysts comprising carriers consisting of an oxide of a metal from Groups IIIB or IVB of the Periodic Table, aluminium and the lanthanide cerium exhibited a high selectivity to carbon monoxide. In contrast, the results also show chat catalysts comprising as carrier samarium oxide, silica and the mixed oxides of barium/cerium and strontium/cerium exhibited only very poor selectivities to carbon monoxide, instead producing large quantities of carbon dioxide.

As mentioned hereinbefore, an important commercial process is the preparation of mixtures of carbon monoxide and hydrogen, which mixture is then used as the feedstock for a hydrocarbon or organic chemical synthesis process. The catalytic partial oxidation of hydrocarbons is one possible method of carrying out this preparation. However, to be commercially attractive, the process would need to be able to operate at elevated pressures, for example from 30 bara to 150 bara, with very high gas hourly space velocities, for example of the order of 1,000,000 Nl/kg/hr. For thermodynamic reasons, in order to obtain the necessary selectivities to carbon monoxide and hydrogen, it is necessary to operate the partial oxidation process at high temperatures. Accordingly, for a partial oxidation process to be viable on a commercial scale, it is essential that the catalyst employed maintains its level of activity and selectivity to the desired products over the prolonged periods of operation demanded of commercial processes.

Further, a most attractive mixture of carbon monoxide and hydrogen for use as feedstock for a commercial synthesis process, such as the Fischer-Tropsch synthesis of paraffins or the synthesis of methanol, is a mixture having a hydrogen to carbon monoxide ratio of about 2.0. Such a mixture may be prepared by the partial oxidation of methane or methane-containing feeds, such as natural gas or associated gas.

Thus, it can be seen that there is a need for a process for the catalytic partial oxidation of methane or methane-containing feeds, in which the catalyst retains a high level of activity and selectivity to both carbon monoxide and hydrogen under conditions of high gas space velocity, elevated pressure and high temperature. Most surprisingly, in contrast to the teachings of the prior art documents, in particular WO 93/01130 it has been found that a process in which catalysts comprising a metal selected from Group VIII of the Periodic Table of the Elements supported on a refractory oxide having at least two cations yields both carbon monoxide and hydrogen under the aforementioned conditions in high yields for prolonged periods of time.

Accordingly, the present invention provides a process for the catalytic partial oxidation of a methane-containing feed, which process comprises contacting a mixture of the feed and an oxygen containing gas, which mixture has an oxygen to carbon ratio in the range of from 0.3 to 0.8, at a temperature of greater than 900°C, at a space velocity of at least 20,000 Nl/kg/h and at elevated pressure with a catalyst comprising a metal selected from Group VIII of the Periodic Table supported on a refractory oxide having at least two cations.

The process of the present invention is suitable for the preparation of a mixture of carbon monoxide and hydrogen from any methane-containing feed. The feed may comprise substantially pure methane. However, typical feeds will comprise methane in combination with one or more other hydrocarbons and gases. The feed preferably comprises methane in an amount of at least 50% by volume, more preferably at least 75% by volume, especially at least 80% by volume. The methane may be in combination with other hydrocarbons, for example light hydrocarbons having from 2 to 4 carbon atoms. The process is particularly suitable for the partial oxidation of natural gas and associated gas.

The feed is contacted with the catalyst as a mixture with an oxygen-containing gas. Air is suitable for use as the oxygen-containing gas. However, the use of substantially pure oxygen as the oxygen-containing gas may be preferred. In this way, the need for handling a large volume of inert gas, for example nitrogen when using air as the oxygen-containing gas, is avoided. The feed may optionally comprise steam.

The methane-containing feed and the oxygen-containing gas are mixed in such amounts as to give an oxygen-to-carbon ratio in the range of from 0.3 to 0.8, more preferably, in the range of from 0.45 to 0.75. References to the oxygen-to-carbon ratio refer to the ratio of oxygen in the form of molecules ($O_2$) to carbon atoms present in the methane-containing feed. Preferably the oxygen-to-carbon ratio is in the range of from 0.45 to 0.65, with oxygen-to-carbon ratios in the region of the stoichiometric ratio of 0.5, that is in a range of from 0.45 to 0.6, being especially preferred. If steam is present in the feed, the steam-to-carbon ratio is preferably in the range of from above 0.0 to 3.0, more preferably from 0.0 to 2.0. The methane-containing feed, oxygen-containing gas and steam, if present, are preferably well mixed prior to being contacted with the catalyst.

The process of the present invention is operated at elevated pressures, that is pressures significantly above atmospheric pressure. The process may be operated at pressures in the range of up to 150 bara. More preferably, the process is operated at pressures in the range of from 5 to 100 bara, especially from 10 to 75 bara.

Under the conditions of high pressure prevailing in the process, the feed must be contacted with the catalyst at high temperatures in order to obtain the desired degree of conversion. Accordingly, the mixture of methane-containing feed and oxygen-containing gas are contacted with catalyst at a temperature greater than 900°C, more preferably a temperature in the range of from 1000 to 1300°C, especially from 1000 to 1200°C. The methane-containing feed and the oxygen-containing gas are preferably preheated prior to being contacted with the catalyst.

The mixture of the methane-containing feed and the oxygen-containing gas may be provided during the process at any suitable space velocity. It is an advantage of the process of this invention that very high gas space velocities can be achieved. Thus, typical space velocities for the process (expressed as normal litres of gas per kilogram of catalyst per hour) are in the range of from 20,000 to 100,000,000 Nl/kg/hr, more preferably in the range of from 50,000 to 50,000,000 Nl/kg/hr. Space velocities in the range of from 500,000 to 30,000,000 Nl/kg/hr are particularly suitable.

The catalyst employed in the process of the present invention comprises a metal of Group VIII of the Periodic Table of the Elements supported on a refractory oxide having at least two cations. The catalyst has a structure arising from the deposition of the Group VIII metal onto the refractory oxide support, for example by means of such techniques as impregnation. Thus, the catalysts comprise the Group VIII metal supported on the surface of the refractory oxide support. This structure is to be contrasted with the structure arising from the use of catalysts as described in the prior art, in which a refractory oxide is applied directly in the partial oxidation process, the prevailing conditions of which reduce oxides present in the refractory material to the corresponding metal, which metal is the catalytically active species.

The catalyst comprises a metal of Group VIII of the Periodic Table of the Elements, with a metal selected from ruthenium, rhodium, palladium, osmium, iridium and platinum being preferred. Catalysts comprising ruthenium, rhodium or iridium as the catalytically active metal are especially preferred for use in the process.

The Group VIII metal is supported on a refractory oxide carrier, which refractory oxide comprises at least two cations. The refractory oxide is preferably a binary or a ternary oxide, consisting of two or three cations respectively, with binary oxides being preferred. The two or more cations of the refractory oxide are preferably each selected from Groups IA, IIA, IIIA and IVA of the Periodic Table of the Elements or the transition metals. More preferably, the two or more cations are each selected from Groups IA, IIA, IIIA, IIIB, IVA and IVB and the lanthanides. A preferred catalyst comprises a refractory oxide having at least one cation selected from Groups IA, IIA and IIIB and the lanthanides and at least one cation selected from Groups IIIA, IVA and IVB. More preferably, the catalyst comprises a refractory oxide having at least one cation from Group IIA or IIIB and at least one cation from Group IIIA or IVB. Barium is a particularly preferred cation selected from Group IIA. Aluminium is a particularly preferred cation selected from Group IIIA. Lanthanum is a most suitable cation selected from Group IIIB. Zirconium is a most suitable cation selected from Group IVB. One most suitable refractory oxide for use as a support in the catalyst is a binary oxide of barium and aluminium, in particular barium hexa-aluminate. A second most suitable refractory oxide for use as a support in the catalyst is a binary oxide of lanthanum and zirconium.

The refractory oxide materials for use as supports in the catalysts are available commercially, or may be prepared by techniques well known in the art.

The catalyst may be prepared using techniques well established in the art, of which impregnation is a preferred technique. The preparation of the catalyst by impregnation comprises contacting the refractory oxide with a solution of a salt of the metal of Group VIII of the Periodic Table. The thus impregnated refractory oxide is then dried and calcined.

Any suitable reaction regime may be applied in the process of the present invention in order to contact the reactants with the catalyst. One suitable regime is a fluidised bed, in which the catalyst is employed in the form of particles fluidised by a stream of gas. A preferred reaction regime for use in the process is a fixed bed reaction regime, in which the catalyst is retained within a reaction zone in a fixed arrangement. Particles of catalyst may be employed in the fixed bed regime, retained using fixed bed reaction techniques well known in the art. Alternatively, the catalyst may be in the form of a foam, prepared, for example, by the impregnation of a ceramic foam of the refractory oxide by the techniques described hereinbefore. Suitable foams for use in the preparation of the catalyst include those having from 30 to 150 pores per inch (12 to 60 pores per centimeter). Further, alternative forms for the catalyst include refractory oxide honeycomb monolith structures.

In a preferred embodiment of the process of this invention, the feed is contacted with a catalyst retained in a fixed bed arrangement, which arrangement has a high tortuosity. The term "tortuosity" is a common term in the art which, when referring to a fixed catalyst bed, can be defined as the ratio of the length of the path taken by a gas flowing through the bed to the length of the shortest straight line path through the bed. Thus, the honeycomb monolith structures have a tortuosity of 1.0. For the purposes of the present invention, the term "high tortuosity" is a reference to arrangements having a tortuosity substantially greater than that of the honeycomb monolith structures, in particular a tortuosity of at least 1.1. A fixed bed of catalyst particles typically has a tortuosity of 1.5, whilst ceramic foams may be prepared having a tortuosity in the range of from 3.0 to 4.0, or even higher. In general, the tortuosity of the fixed bed arrangement is preferably in the range of from 1.1 to 10.0, more preferably to 5.0. A most suitable range of tortuosity is from 1.3 to 4.0.

It has been found that by employing the catalyst in a fixed bed arrangement having a high tortuosity allows the required conversion to be achieved with only a relatively very short contact time between the reacting gases and the catalyst. In this way, only a very low volume of catalyst is required, which in turn allows the very high gas space velocities desirable for operating a commercial process to be achieved.

The feed is preferably contacted with the catalyst under adiabatic conditions. For the purposes of this specification, the term "adiabatic" is a reference to reaction conditions in which substantially all heat loss and radiation from the reaction zone is prevented, with the exception of heat leaving in the gaseous effluent stream of the reactor.

In a further aspect, the present invention relates to carbon monoxide or hydrogen whenever prepared by a process as hereinbefore described.

The mixture of carbon monoxide and hydrogen prepared by the process of this invention is particularly suitable for use in the synthesis of hydrocarbons, for example by means of the Fischer-Tropsch synthesis, or the synthesis of oxygenates, for example methanol. Processes for the conversion of the mixture of carbon monoxide and hydrogen into such products are well known in the art.

The process of the present invention is further described by way of the following illustrative examples, in which Examples 1, 3 and 4 relate to a process according to the present invention and Examples 2 and 5 are for comparative purposes only.

Example 1

Catalyst Preparation

Barium hexa-aluminate ($BaAl_{12}O_{19}$) was prepared as follows:

Barium (21.0 g) was added to isopropyl alcohol (1500 ml) under an atmosphere of nitrogen and the resultant mixture heated under reflux for 1.5 hours. Further isopropyl alcohol (1000 ml) was added to the resulting solution. Thereafter, aluminium isopropylate (379.65 g) was added stepwise and the mixture heated under reflux for a period of 5 hours. The resulting mixture (601.87 g) was combined with demineralised water (22.5 g) and heated under reflux whilst stirring for a further 1 hour. The resulting solution was subsequently heated to evaporate the solvent to leave a solid residue. The solid was dried by heating to 120°C and maintained at that temperature for 4 hours. Thereafter, the solid was calcined in a first stage by heating to 450°C over a period of 4 hours and being held at that temperature for 1 hour and in a second stage by heating to 1300°C over a period of 1 hour and being held at that temperature for 5 hours.

An aqueous solution was prepared by dissolving rhodium chloride ($RhCl_3$, 2.0 g) and hydrochloric acid (37%, 1.0 g) in demineralised water (6.83 g) to give a rhodium concentration of 10% by weight. The barium hexa-aluminate prepared as described hereabove (30/80 mesh, 2.0 g) was immersed in the aforementioned aqueous solution (1.07 g). The resulting mixture was agitated firstly in a rolling mill for 1 hour and thereafter in a rotary drier for 1 hour. The resulting material was dried in an oven by heating for 1 hour and being held at a temperature of 120°C for 5 hours and subsequently calcined by heating for 5 hours and being held at a temperature of 500°C for 1 hour. The resulting catalyst comprised 5.0% by weight rhodium.

<u>Catalytic Partial Oxidation</u>

A reactor was constructed comprising a transparent sapphire tube mounted concentrically within an outer transparent polycarbonate tube. The rhodium-containing catalyst prepared as hereinbefore described was loaded into the sapphire tube and retained in the form of a fixed bed of catalyst particles having a tortuosity of 1.5. Methane and oxygen, in sufficient amounts to give an oxygen-to-carbon ratio of 0.59, were thoroughly mixed just before being introduced into the reactor to contact the fixed bed of catalyst. The mixture of methane and oxygen was fed to the reactor at a pressure of 5 bara and at a gas hourly space velocity (GHSV) of 1,240,000 Nl/kg/hr.

The operating temperature of the catalyst bed was measured by optical pyrometry. The composition of the gas mixture leaving the reactor was measured by gas chromatography. The conversion and the selectivity of the process to carbon monoxide and hydrogen (on the basis of methane converted) was determined. The operating conditions of the reactor and the results of the experiment are summarised in Table 1 hereinbelow.

<u>Example 2</u>

<u>Catalyst Preparation</u>

An aqueous solution containing rhodium chloride was prepared as described in Example 1. The solution contained rhodium in an amount of 10% by weight. Alpha alumina extrudates (commercially available ex. Engelhard, crushed to 30/80 mesh size, 10.0 g) were immersed in the aforementioned solution (5.33 g). The resulting mixture was agitated firstly on a rolling mill for 1 hour and thereafter in a rotary drier for 1 hour. The resulting material was dried in an oven by heating for 1 hour and being held at a temperature of 120°C for 5 hours and subsequently calcined by heating for 5 hours and being held at a temperature of 500°C for 1 hour. The resulting catalyst comprised 5.0% by weight rhodium.

<u>Catalytic Partial Oxidation</u>

The catalyst prepared as described hereinbefore was loaded into the apparatus and tested for activity in the partial oxidation of methane using the same general procedure described in Example 1. The operating conditions of the reactor and the results of the experiment are summarised in Table 1 hereinbelow.

<u>Example 3</u>

A catalyst comprising 5.0% by weight rhodium supported on barium hexa-aluminate was prepared as described in Example 1 hereinbefore. The catalyst was loaded into the apparatus and tested for activity in the catalytic partial oxidation of methane using the same general procedure described in Example 1. The operating conditions of the reactor and the results of the experiment are summarised in Table 2 hereinbelow.

<u>Example 4</u>

<u>Catalyst Preparation</u>

Lanthanum zirconate ($La_2Zr_2O_7$) was prepared using the following method:

Lanthanum nitrate ($La(NO_3)_3.6H_2O$, 27.07 g) and zirconium oxychloride ($ZrOCl_2.8H_2O$, 20.14 g) were dissolved in demineralised water (200 ml). Citric acid (30 g) was added to the resulting solution. The resulting mixture was heated to evaporate the solvent, leaving a solid material as residue. The solid material was dried by heating in an oven to 140°C and being held at that temperature for 7 hours. Thereafter, the resulting material was calcined in an oven by heating to 700°C over a period of 5 hours and being held at that temperature for 2 hours. Finally, the solid material was heated at 1100°C for 5 hours.

An aqueous solution containing rhodium chloride was prepared as described in Example 1. The solution contained rhodium in an amount of 10% by weight. The lanthanum zirconate prepared as described hereabove (1.4 g) was immersed in the aforementioned solution (1.7 ml). The resulting mixture was agitated firstly on a rolling mill for 1 hour and thereafter in a rotary drier for 1 hour. The resulting material was dried in an oven by heating for 1 hour and being held at a temperature of 120°C for 5 hours and subsequently calcined by heating for 5 hours and being held at a temperature of 500°C for 1 hour. The resulting catalyst comprised 5.0% by weight rhodium.

Catalytic Partial Oxidation

The catalyst prepared as described hereinbefore was loaded into the apparatus and tested for activity in the partial oxidation of methane using the same general procedure described in Example 1. The operating conditions of the reactor and the results of the experiment are summarised in Table 2 hereinbelow.

Example 5

A catalyst comprising 5.0% by weight rhodium supported on alpha-alumina was prepared as described in Example 2 hereinbefore. The catalyst was loaded into the apparatus and tested for activity in the catalytic partial oxidation of methane using the same general procedure described in Example 1. The operating conditions of the reactor and the results of the experiment are summarised in Table 2 hereinbelow.

Table 1

| Catalyst | Example 1 $Rh/BaAl_{12}O_{19}$ | Example 2 Rh/alpha-$Al_2O_3$ |
|---|---|---|
| Operating Conditions | | |
| Temperature (°C) | 1030 | 1040 |
| Pressure (bara) | 5 | 5 |
| GHSV (1000 Nl/kg/hr) | 1240 | 1240 |
| oxygen/carbon ratio | 0.59 | 0.59 |
| Initial Performance | | |
| $CH_4$ conversion (%) | 89.6 | 89.0 |
| CO selectivity (%)[1] | 91.0 | 91.5 |
| $H_2$ selectivity (%)[2] | 90.4 | 88.8 |
| Performance after 100 hours | | |
| $CH_4$ conversion (%) | 89.4 | 85.8 |
| CO selectivity (%)[1] | 91.0 | 91.2 |
| $H_2$ selectivity (%)[2] | 90.0 | 87.5 |
| Deactivation (%)[3] | | |
| $CH_4$ conversion (%) | 0.15 | 3.63 |
| CO selectivity (%) | 0.07 | 0.29 |
| $H_2$ selectivity (%) | 0.46 | 1.52 |

[1] selectivity to CO based on $CH_4$ conversion
[2] selectivity to $H_2$ based on $CH_4$ conversion
[3] calculated by linear regression of the data for the first 100 hours

# EP 0 640 561 B1

Table 2

| Catalyst | Example 3 Rh/BaAl$_{12}$O$_{19}$ | Example 4 Rh/La$_2$Zr$_2$O$_7$ | Example 5 Rh/alpha-Al$_2$O$_3$ |
|---|---|---|---|
| Operating Conditions | | | |
| Temperature (°C) | 1055 | 1100 | 1060 |
| Pressure (bara) | 10 | 10 | 10 |
| GHSV (1000 Nl/kg/hr) | 3300 | 3300 | 3300 |
| oxygen/carbon ratio | 0.59 | 0.59 | 0.59 |
| Initial Performance | | | |
| CH$_4$ conversion (%) | 90.4 | 86.6 | 89.0 |
| CO selectivity (%)[1] | 92.1 | 91.8 | 93.7 |
| H$_2$ selectivity (%)[2] | 89.6 | 87.0 | 88.5 |
| Performance after 100 hours[3] | | | |
| CH$_4$ conversion (%) | 89.3 | 86.3 | 79.3 |
| CO selectivity (%)[1] | 92.1 | 91.8 | 93.0 |
| H$_2$ selectivity (%)[2] | 89.6 | 86.0 | 80.4 |
| Deactivation (%)[3] | | | |
| CH$_4$ conversion (%) | 1.20 | 0.30 | 10.90 |
| CO selectivity (%) | 0.00 | 0.00 | 0.80 |
| H$_2$ selectivity (%) | 0.00 | 1.10 | 9.20 |

[1] selectivity to CO based on CH$_4$ conversion
[2] selectivity to H$_2$ based on CH$_4$ conversion
[3] calculated by linear regression of the data for the first 60 hours for Examples 3 and 4 and for the first 46 hours for Example 5

**Claims**

1. A process for the catalytic partial oxidation of a methane-containing feed, which process comprises contacting a mixture of the feed and an oxygen containing gas, which mixture has an oxygen to carbon ratio in the range of from 0.3 to 0.8, at a temperature of greater than 900°C, at a space velocity of at least 20,000 Nl/kg/hr and at elevated pressure with a catalyst comprising a metal selected from Group VIII of the Periodic Table supported on a refractory oxide having at least two cations.

2. A process according to claim 1, characterised in that the methane-containing feed comprises methane in an amount of at least 50% by volume, preferably at least 75% by volume, more preferably at least 80% by volume.

3. A process according to either of claims 1 or 2, characterised in that the methane-containing feed is natural gas or associated gas.

4. A process according to any preceding claim, characterised in that the mixture comprises the methane-containing feed and the oxygen-containing gas in amounts sufficient to give an oxygen-to-carbon ratio in the range of from 0.3 to 0.8, preferably from 0.45 to 0.75, more preferably from 0.45 to 0.65.

5. A process according to any preceding claim, characterised in that the mixture is contacted with the catalyst at a pressure in the range of up to 150 bara, preferably in the range of from 5 to 100 bara, more preferably from 10 to 75 bara.

8

6. A process according to any preceding claim, characterised in that the mixture is contacted with the catalyst at a temperature in the range of from 1000 to 1300°C, preferably from 1000 to 1200°C.

7. A process according to any preceding claim, characterised in that the mixture is provided at a space velocity in the range of from 20,000 to 100,000,000 Nl/kg/hr, preferably from 50,000 to 50,000,000 Nl/kg/hr, more preferably from 500,000 to 30,000,000 Nl/kg/hr.

8. A process according to any preceding claim, characterised in that the metal selected from Group VIII of the Periodic Table is ruthenium, rhodium, palladium, osmium, iridium or platinum, preferably ruthenium, rhodium or iridium.

9. A process according to any preceding claim, characterised in that the refractory oxide is a binary or a ternary oxide, preferably a binary oxide.

10. A process according to any preceding claim, characterised in that the refractory oxide comprises two or more cations, each selected from Groups IA, IIA, IIIA and IVA and the transition metals, preferably selected from Groups IA, IIA, IIIA, IIIB, IVA and IVB and the lanthanides.

11. A process according to claim 10, characterised in that the refractory oxide comprises at least one cation selected from Groups IA, IIA and IIIB and at least one cation selected from Groups IIIA, IVA and IVB, preferably at least one cation from Group IIA or IIIB and at least one cation from Group IIIA or IVB.

12. A process according to claim 11, characterised in that the refractory oxide comprises as cations barium and aluminium or lanthanum and zirconium.

13. A process according to any preceding claim, characterised in that catalyst is retained in a fixed bed arrangement, preferably a fixed bed arrangement having a high tortuosity, more preferably having a tortuosity in the range of from 1.1 to 5.0.

**Patentansprüche**

1. Verfahren zur katalytischen Partialoxidation eines methanhältigen Einsatzmaterials, welches Verfahren ein Inkontaktbringen eines Gemisches aus dem Einsatzmaterial und einem sauerstoffhältigen Gas, welches Gemisch ein Sauerstoff/Kohlenstoff-Verhältnis im Bereich von 0,3 bis 0,8 hat, bei einer Temperatur von über 900°C, bei einer Raumgeschwindigkeit von wenigstens 20.000 Nl/kg/h und bei einem erhöhtem Druck mit einem Katalysator umfaßt, der ein aus der Gruppe VIII des Periodensystems ausgewähltes Metall, aufgebracht auf ein feuerfestes Oxid, das wenigstens zwei Kationen hat, enthält.

2. Verfahren nach Anspruch 1, dadurch gekennzeichnet, daß das methanhältige Einsatzmaterial Methan in einer Menge von wenigstens 50 Vol.-%, vorzugsweise wenigstens 75 Vol.-%, stärker bevorzugt wenigstens 80 Vol.-% enthält.

3. Verfahren nach Anspruch 1 oder 2, dadurch gekennzeichnet, daß das methanhältige Einsatzmaterial Erdgas oder Begleitgas ist.

4. Verfahren nach einem der vorstehenden Ansprüche, dadurch gekennzeichnet, daß das Gemisch das methanhältige Einsatzmaterial und das sauerstoffhältige Gas in ausreichenden Mengen enthält, um ein Sauerstoff/Kohlenstoff-Verhältnis im Bereich von 0,3 bis 0,8, vorzugsweise von 0,45 bis 0,75, stärker bevorzugt von 0,45 bis 0,65 zu ergeben.

5. Verfahren nach einem der vorstehenden Ansprüche, dadurch gekennzeichnet, daß das Gemisch bei einem Druck im Bereich von bis zu 150 bara, vorzugsweise im Bereich von 5 bis 100 bara, stärker bevorzugt von 10 bis 75 bara mit dem Katalysator in Kontakt gebracht wird.

6. Verfahren nach einem der vorstehenden Ansprüche, dadurch gekennzeichnet, daß das Gemisch bei einer Temperatur im Bereich von 1.000 bis 1.300°C, vorzugsweise von 1.000 bis 1.200°C mit dem Katalysator in Berührung gebracht wird.

7. Verfahren nach einem der vorstehenden Ansprüche, dadurch gekennzeichnet, daß das Gemisch bei einer Raumgeschwindigkeit im Bereich von 20.000 bis 100.000.000 Nl/kg/h, vorzugsweise von 50.000 bis 50.000.000 Nl/kg/h, stärker bevorzugt von 500.000 bis 30.000.000 Nl/kg/h zugeführt wird.

8. Verfahren nach einem der vorstehenden Ansprüche, dadurch gekennzeichnet, daß das aus der Gruppe VIII des Periodensystems ausgewählte Metall Ruthenium, Rhodium, Palladium, Osmium, Iridium oder Platin, vorzugsweise Ruthenium, Rhodium oder Iridium ist.

9. Verfahren nach einem der vorstehenden Ansprüche, dadurch gekennzeichnet, daß das feuerfeste Oxid ein binäres oder ein ternäres Oxid, vorzugsweise ein binäres Oxid ist.

10. Verfahren nach einem der vorstehenden Ansprüche, dadurch gekennzeichnet, daß das feuerfeste Oxid zwei oder mehrere Kationen enthält, jeweils ausgewählt aus den Gruppen IA, IIA, IIIA und IVA und den Übergangsmetallen, vorzugsweise ausgewählt aus den Gruppen IA, IIA, IIIA, IIIB, IVA und IVB und den Lanthaniden.

11. Verfahren nach Anspruch 10, dadurch gekennzeichnet, daß das feuerfeste Oxid wenigstens ein Kation, ausgewählt aus den Gruppen IA, IIA und IIIB und wenigstens ein Kation, ausgewählt aus den Gruppen IIIA, IVA und IVB enthält, vorzugsweise wenigstens ein Kation aus der Gruppe IIA oder IIIB und wenigstens ein Kation aus der Gruppe IIIA oder IVB.

12. Verfahren nach Anspruch 11, dadurch gekennzeichnet, daß das feuerfeste Oxid als Kationen Barium und Aluminium oder Lanthan und Zirkon enthält.

13. Verfahren nach einem der vorstehenden Ansprüche, dadurch gekennzeichnet, daß der Katalysator in einer Festbettanordnung gehalten ist, vorzugsweise einer Festbettanordnung mit einer hohen Tortuosität, stärker bevorzugt mit einer Tortuosität im Bereich von 1,1 bis 5,0.

**Revendications**

1. Procédé d'oxydation partielle catalytique d'une charge contenant du méthane, lequel procédé comprend la mise en contact d'un mélange de la charge et d'un gaz contenant de l'oxygène, lequel mélange possède un rapport oxygène à carbone qui varie de 0,3 à 0,8, à une température supérieure à 900°C, à une vitesse spatiale d'au moins 20.000 litres normaux/kg/h et sous pression élevée, avec un catalyseur comprenant un métal choisi dans le groupe VIII du tableau périodique porté par un oxyde réfractaire possédant au moins deux cations.

2. Procédé suivant la revendication 1, caractérisé en ce que la charge contenant du méthane comprend du méthane en une proportion d'au moins 50% en volume, de préférence, d'au moins 75% en volume, plus avantageusement, d'au moins 80% en volume.

3. Procédé suivant l'une quelconque des revendications 1 et 2, caractérisé en ce que la charge contenant du méthane est le gaz naturel, ou le gaz associé.

4. Procédé suivant l'une quelconque des revendications précédentes, caractérisé en ce que le mélange comprend la charge contenant du méthane et le gaz contenant de l'oxygène en proportions qui suffisent à donner un rapport oxygène à carbone qui fluctue dans la plage de 0,3 à 0,8, de préférence, de 0,45 à 0,75, bien mieux encore, de 0,45 à 0,65.

5. Procédé suivant l'une quelconque des revendications précédentes, caractérisé en ce que l'on met le mélange en contact avec le catalyseur à une pression qui varie dans une plage qui s'étend jusqu'à 150 baras, de préférence, dans la plage de 5 à 100 baras, plus avantageusement encore, de 10 à 75 baras.

6. Procédé suivant l'une quelconque des revendications précédentes, caractérisé en ce que l'on met le mélange en contact avec le catalyseur à une température qui fluctue de 1000 à 1300°C, de préférence, de 1000 à 1200°C.

7. Procédé suivant l'une quelconque des revendications précédentes, caractérisé en ce que l'on fournit le mélange à une vitesse spatiale qui varie de 20.000 à 100.000.000 de litres normaux/kg/h, de préférence, de 50.000 à 50.000.000 de litres normaux/kg/h, plus avantageusement, de 500.000 à 30.000.000 de litres normaux/kg/h.

8. Procédé suivant l'une quelconque des revendications précédentes, caractérisé en ce que le métal choisi parmi les éléments du groupe VIII du tableau périodique est le ruthénium, le rhodium, le palladium, l'osmium, l'iridium ou le platine, de préférence, le ruthénium, le rhodium ou l'iridium.

9. Procédé suivant l'une quelconque des revendications précédentes, caractérisé en ce que l'oxyde réfractaire est un oxyde binaire ou un oxyde ternaire, de préférence, un oxyde binaire.

10. Procédé suivant l'une quelconque des revendications précédentes, caractérisé en ce que l'oxyde réfractaire comprend deux ou plus de deux cations, chacun d'entre eux étant choisi parmi les éléments des groupes IA, IIA, IIIA et IVA et les métaux de transition, de préférence, parmi les éléments des groupes IA, IIA, IIIA, IIIB, IVA et IVB et les lanthanides.

11. Procédé suivant la revendication 10, caractérisé en ce que l'oxyde réfractaire comprend au moins un cation choisi parmi les éléments des groupes IA, IIA et IIIB et au moins un cation choisi parmi les éléments des groupes IIIA, IVA et IVB, de préférence, au moins un cation choisi parmi les éléments des groupes IIA et IIIB et au moins un cation choisi parmi les éléments des groupes IIIA et IVB.

12. Procédé suivant la revendication 11, caractérisé en ce que l'oxyde réfractaire comprend, à titre de cations, du baryum et de l'aluminium ou du lanthane et du zirconium.

13. Procédé suivant l'une quelconque des revendications précédentes, caractérisé en ce que le catalyseur est retenu selon un agencement à lit fixe, de préférence, un agencement à lit fixe possédant une tortuosité élevée, plus avantageusement, une tortuosité qui varie de 1,1 à 5,0.